(19) Europäisches Patentamt
European Patent Office
Office européen des brevets

(11) **EP 4 506 426 A1**

(12) **EUROPEAN PATENT APPLICATION**
published in accordance with Art. 153(4) EPC

(43) Date of publication:
**12.02.2025 Bulletin 2025/07**

(21) Application number: **23784710.8**

(22) Date of filing: **31.03.2023**

(51) International Patent Classification (IPC):
**C09D 11/38** (2014.01)    **B41M 5/00** (2006.01)
**B41J 2/01** (2006.01)    **B41J 2/175** (2006.01)

(52) Cooperative Patent Classification (CPC):
**B41J 2/01; B41J 2/175; B41M 5/00; C09D 11/30;
C09D 11/38**

(86) International application number:
**PCT/JP2023/013543**

(87) International publication number:
**WO 2023/195423 (12.10.2023 Gazette 2023/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:    **08.04.2022   JP 2022064540**

(71) Applicant: **BROTHER KOGYO KABUSHIKI
KAISHA
Nagoya-shi, Aichi 467-8561 (JP)**

(72) Inventors:
• **TSUZAKA Yuka**
**Nagoya-shi, Aichi 467-8562 (JP)**
• **ISOGAI Masato**
**Nagoya-shi, Aichi 467-8562 (JP)**
• **MAEDA Mitsunori**
**Nagoya-shi, Aichi 467-8562 (JP)**

(74) Representative: **Prüfer & Partner mbB
Patentanwälte · Rechtsanwälte
Sohnckestraße 12
81479 München (DE)**

(54) **WATER-BASED INK FOR INKJET RECORDING, INKJET RECORDING METHOD, INKJET
RECORDING DEVICE, AND INK STORAGE CONTAINER**

(57)    An aqueous ink for ink jet recording including lignosulfonic acid or a salt thereof and having preservability is provided. The aqueous ink for ink jet recording includes water, a water-soluble organic solvent, a coloring agent and lignosulfonic acid or a salt thereof, in which the coloring agent is at least one of a self-dispersed pigment, a resin dispersion pigment, and a water-soluble dye.

EP 4 506 426 A1

**Description**

TECHNICAL FIELD

The present invention relates to an aqueous ink for ink jet recording, an inkjet recording method, an ink jet recording device, and an ink storage container.

BACKGROUND ART

Examples of an aqueous ink for ink jet recording include an ink described in Patent Literature 1. The ink described in Patent Literature 1 contains a chemically synthesized product as a preservative.

CITATION LIST

PATENT LITERATURE

Patent Literature 1: JP2008-239733A

SUMMARY OF INVENTION

TECHNICAL PROBLEM

In recent years, as environmental issues have become a major concern, environmentally friendly products have become more widespread, and there is a demand for an aqueous ink for ink jet recording having less environmental impact. Therefore, there is a demand for an aqueous ink for ink jet recording that contains a component containing a raw material derived from a natural material having low environmental impact.
Therefore, an object of the present invention is to provide an ink for ink jet recording that contains a component containing a raw material derived from a natural material, which can reduces environmental impact.

SOLUTION TO PROBLEM

In order to achieve the above object, an aqueous ink for ink jet recording according to the present invention contains: water; a water-soluble organic solvent; a coloring agent; and lignosulfonic acid or a salt thereof, in which the coloring agent is at least one of a self-dispersed pigment, a resin dispersion pigment, and a water-soluble dye.

ADVANTAGEOUS EFFECTS OF INVENTION

After investigating a preservative derived from a natural material, the inventor of the present invention has presumed that lignosulfonic acid or a salt thereof has a preservative effect due to a chemical structure thereof, and based on this presumption, has conceived of blending lignosulfonic acid or a salt thereof in an inkjet ink. Accordingly, it has been found that when lignosulfonic acid or a salt thereof is used as a preservative in the inkjet ink, a preservative effect is exhibited on the ink. In this way, the inventor of the present invention is the first to find that lignosulfonic acid or a salt thereof can be used as a preservative for the inkjet ink. In this way, the aqueous ink for ink jet recording according to the present invention contains lignosulfonic acid or a salt thereof derived from a natural material, and therefore has preservability and can contribute to reducing environmental impact.

BRIEF DESCRIPTION OF DRAWINGS

Figure is a schematic perspective view showing a configuration of an example of an ink jet recording device according to the present invention.

DESCRIPTION OF EMBODIMENTS

In the present invention, "mass" may be referred to as "weight" unless otherwise specified. For example, "mass ratio" may be referred to as "weight ratio" unless otherwise specified, and "mass%" may be referred to as "wt%" unless otherwise specified.
An aqueous ink for ink jet recording according to the present invention (hereinafter, sometimes referred to as an "aqueous ink" or an "ink") will be described. The aqueous ink according to the present invention contains: water; a water-soluble organic solvent; a coloring agent; and lignosulfonic acid or a salt thereof, in which the coloring agent is at least one of a self-dispersed pigment, a resin dispersion pigment, and a water-soluble dye. Note that, in the ink according to the present invention, since the coloring agent is at least one of a self-dispersed pigment, a resin dispersion pigment, and a water-soluble dye, lignosulfonic acid or a salt thereof does not function as a dispersant for the coloring agent. In addition, lignosulfonic acid or a salt thereof may has not only a preservative effect but also, for example, an agglomerating effect (OD value increasing effect) for the coloring agent.

As the water-soluble organic solvent, a water-soluble organic solvent known in the related art can be used. The water-soluble organic solvent include is not particularly limited, and examples thereof include a polyhydric alcohol, a polyhydric alcohol derivative, an alcohol, an amide, a ketone, a ketoalcohol, an ether, a nitrogen-containing solvent, a sulfur-containing solvent, propylene carbonate, ethylene carbonate, and 1,3-dimethyl-2-imidazolidinone. Examples of the polyhydric alcohol include glycerin, ethylene glycol, diethylene glycol, propylene glycol, butylene glycol, hexylene glycol, triethylene glycol, polyethylene glycol, dipropylene glycol, tripropylene glycol, polypropylene glycol, trimethylolpropane, 1,5-pentanediol, and 1,2,6-hexanetriol. Examples of the polyhydric alcohol derivative include ethylene glycol methyl ether, ethylene glycol ethyl ether, ethylene glycol-n-propyl ether, ethylene glycol-n-butyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, and tripropylene glycol-n-butyl ether. Examples of the alcohol include methyl alcohol, ethyl alcohol, n-propyl alcohol, isopropyl alcohol, n-butyl alcohol, sec-butyl alcohol, isobutyl alcohol, tert-butyl alcohol, and benzyl alcohol. Examples of the amide include dimethylformamide and dimethylacetamide. Examples of the ketone include acetone. Examples of the ketoalcohol include diacetone alcohol. Examples of the ether include tetrahydrofuran and dioxane. Examples of the nitrogen-containing solvent include pyrrolidone, 2-pyrrolidone, N-methyl-2-pyrrolidone, cyclohexylpyrrolidone, and triethanolamine. Examples of the sulfur-containing solvent include thiodiethanol, thiodiglycol, thiodiglycerol, sulfolane, and dimethyl sulfoxide. A blending amount of the water-soluble organic solvent with respect to a total amount of the treatment agent is not particularly limited. The water-soluble organic solvent may be used alone or in combination of two or more types thereof.

The self-dispersion type pigment can be dispersed in water without using a dispersant, for example, by introducing at least one of a hydrophilic functional group such as a carbonyl group, a hydroxy group, a carboxylic acid group, a sulfonic acid group, and a phosphoric acid group, and a salt thereof into pigment particles by chemical bonding, either directly or through other groups. As the self-dispersion type pigment, for example, pigments treated by methods described in JPH08-3498A, JP2000-513396A, JP2008-524400A, JP2009-515007A, and JP2011-515535A can be used. As a raw material of the self-dispersion type pigment, either an inorganic pigment or an organic pigment can be used. In addition, examples of the pigment suitable for the treatment include carbon black such as "MA8" and "MA100" manufactured by Mitsubishi Chemical Corporation. The self-dispersion type pigment may be, for example, a commercially available product. Examples of the commercially available product include: "CAB-O-JET (registered trademark) 200", "CAB-O-JET (registered trademark) 250C", "CAB-O-JET (registered trademark) 260M", "CAB-O-JET (registered trademark) 270Y", "CAB-O-JET (registered trademark) 300", "CAB-O-JET (registered trademark) 400", "CAB-O-JET (registered trademark) 450C", "CAB-O-JET (registered trademark) 465M", and "CAB-O-JET (registered trademark) 470Y" manufactured by Cabot Corporation; "BONJET (registered trademark) BLACK CW-2" and "BONJET (registered trademark) BLACK CW-3" manufactured by ORIENT CHEMICAL INDUSTRIES CO., LTD; and "LIOJET (registered trademark) WD BLACK 002C" manufactured by TOYO INK CO., LTD.

In the present invention, the "resin dispersion pigment" refers to a pigment in which a resin dispersant is adsorbed onto the surface of the pigment, thereby imparting dispersion stability to the pigment in a solvent or the like unless otherwise specified. As the resin dispersant, for example, a general polymer dispersant (also referred to as a resin for pigment dispersion or a resin dispersant) may be used, and the resin dispersant may be prepared. In addition, in the aqueous ink according to the present invention, the pigment may be encapsulated with a polymer. As the resin dispersant, for example, those containing at least one of methacrylic acid and acrylic acid as a monomer can be used, and for example, a commercially available product may be used. The resin dispersant may be, for example, a block copolymer, a graft copolymer, or a random copolymer made of hydrophobic monomers such as styrene, a styrene derivative, vinylnaphthalene, a vinylnaphthalene derivative, aliphatic alcohol esters of $\alpha,\beta$-ethylenically unsaturated carboxylic acids, or two or more monomers selected from the group consisting of acrylic acid, an acrylic acid derivative, maleic acid, a maleic acid derivative, itaconic acid, an itaconic acid derivative, fumaric acid, and a fumaric acid derivative, or a salt thereof. Examples of the commercially available product include: "Joncryl (registered trademark) 611", "Joncryl (registered trademark) 60", "Joncryl (registered trademark) 586", "Joncryl (registered trademark) 687", "Joncryl (registered trademark) 63", and "Joncryl (registered trademark) HPD296" manufactured by Johnson Polymer Co., Ltd.; "Disperbyk 190" and "Disperbyk 191" manufactured by BYK; and "Solsperse 20000" and "Solsperse 27000" manufactured by Zeneca Corporation.

Examples of a method for dispersing the pigment using the resin for pigment dispersion include dispersing the pigment using a dispersing device. The dispersing device used for dispersing the pigment is not particularly limited as long as the dispersing device is a general disperser, and examples thereof include a ball mill, a roll mill, and a sand mill (for example, a high-speed type sand mill).

The water-soluble dye is not particularly limited, and examples thereof include a direct dye, an acid dye, a basic dye, and a reactive dye. Specific examples of the water-soluble dye include C.I. Direct Black, C.I. Direct Blue, C.I. Direct Red, C.I. Direct Yellow, C.I. Direct Orange, C.I. Direct Violet, C.I. Direct Brown, C.I. Direct Green, C.I. Acid Black, C.I. Acid Blue, C.I. Acid Red, C.I. Acid Yellow, C.I. Acid Orange, C.I. Acid Violet, C.I. Basic Black, C.I. Basic Blue, C.I. Basic Red, C.I. Basic Violet, and C.I. Food Black. Examples of the C.I. Direct Black include C.I. Direct Black 17, 19, 32, 51, 71, 108, 146, 154, and 168. Examples of the C.I. Direct Blue include C.I. Direct Blue 6, 22, 25, 71, 86, 90, 106, and 199. Examples of the C.I. Direct Red include C.I. Direct Red 1, 4, 17, 28, 83, and 227. Examples of the C.I. Direct Yellow include C.I. Direct Yellow 12, 24, 26, 86, 98, 132, 142, and 173. Examples of the C.I. Direct Orange include C.I. Direct Orange 34, 39, 44, 46, and 60. Examples of the C.I. Direct Violet include C.I. Direct Violet 47 and 48. Examples of the C.I. Direct Brown include C.I. Direct Brown 109. Examples of the C.I. Direct Green include C.I. Direct Green 59. Examples of the C.I. Acid Black include C.I. Acid Black 2, 7, 24, 26, 31, 52, 63, 112, and 118. Examples of the C.I. Acid Blue include C.I. Acid Blue 9, 22, 40, 59, 90, 93, 102, 104, 117, 120, 167, 229, and 234. Examples of the C.I. Acid Red include C.I. Acid Red 1, 6, 32, 37, 51, 52, 80, 85, 87, 92, 94, 115, 180, 256, 289, 315, and 317. Examples of the C.I. Acid Yellow include C.I. Acid Yellow 11, 17, 23, 25, 29, 42, 61, and 71. Examples of the C.I. Acid Orange include C.I. Acid Orange 7 and 19. Examples of the C.I. Acid Violet include C.I. Acid Violet 49. Examples of the C.I. Basic Black include C.I. Basic Black 2. Examples of the C.I. Basic Blue include C.I. Basic Blue 1, 3, 5, 7, 9, 24, 25, 26, 28, and 29. Examples of the C.I. Basic Red include C.I. Basic Red 1, 2, 9, 12, 13, 14, and 37. Examples of the C.I. Basic Violet include C.I. Basic Violet 7, 14, and 27. Examples of the C.I. Food Black include C.I. Food Black 1 and 2.

The water-soluble dye has excellent properties such as clarity and stability. The water-soluble dye may be used alone or in combination of two or more types thereof.

A lignosulfonic acid salt in the lignosulfonic acid or a salt thereof (hereinafter, may be referred to as "lignosulfonic acid salt or the like") is not particularly limited, and examples thereof include sodium lignosulfonate, calcium lignosulfonate, magnesium lignosulfonate, and ammonium lignosulfonate.

The aqueous ink according to the present invention may contain, for example, a component other than the lignosulfonic acid salt or the like as a preservative component. Examples of the component other than the lignosulfonic acid salt or the like include a naturally derived component other than the lignosulfonic acid salt or the like or a chemically synthesized component. These components may be used alone or in combination of two or more types thereof. From the viewpoint of environmental consideration, it is preferable to contain more naturally derived component than the chemically synthesized component, and it is more preferable to contain only the naturally derived component.

A blending amount of the lignosulfonic acid salt or the like with respect to a total amount of the aqueous ink is not particularly limited, may be, for example, 0.1 mass% or more, 0.2 mass% or more, 0.4 mass% or more, 0.5 mass% or more, 1.2 mass% or more, or 2.0 mass% or more, and 5.0 mass% or less, 4.5 mass% or less, 4.0 mass% or less, or 2.0 mass% or less, and is, for example, 0.1 mass% to 5.0 mass%, preferably 0.2 mass% to 5.0 mass%, and more preferably 0.2 mass% to 4.5 mass%.

When the pigment is contained as the coloring agent, the blending amount of the lignosulfonic acid salt or the like with respect to the total amount of the aqueous ink is, for example, 0.5 mass% to 4.5 mass%, preferably 1.2 mass% to 4.0 mass%, and more preferably 1.2 mass% to 2.0 mass%.

When the dye is contained as the coloring agent, the blending amount of the lignosulfonic acid salt or the like with respect to the total amount of the aqueous ink is, for example, 1.0 mass% to 5.0 mass%, preferably 1.0 mass% to 4.0 mass%, and more preferably 2.0 mass% to 4.0 mass%.

A mass ratio (A/C) of a content (A) of the pigment to a content (C) of the lignosulfonic acid or a salt thereof in the total amount of the aqueous ink for ink jet recording is not particularly limited, and is, for example, 1 to 9.5, preferably 2 to 9.5, and more preferably 2 to 5.

A mass ratio (B/C) of a content (B) of the dye to the content (C) of the lignosulfonic acid or a salt thereof in the total amount of the aqueous ink for ink jet recording is not particularly limited, and is, for example, 1 to 10, preferably 1 to 5, and more preferably 1 to 2.

The water may be ion exchange water, pure water, or the like. A blending amount (water proportion) of the water with respect to the total amount of the aqueous ink is appropriately determined according to desired ink properties and the like. The water proportion may be, for example, the balance except for other components. For example, the blending amount of the water is 50 mass% to 95 mass%, preferably 55 mass% to 90 mass%, and more preferably 60 mass% to 80 mass%.

The aqueous ink may further contain an additive known in the related art, if necessary. Examples of the additive include a pH adjuster, a viscosity modifier, a surface tension regulator, and an antifungal agent. Examples of the viscosity modifier include polyvinyl alcohol, cellulose, and a water-soluble resin.

Next, an ink storage container according to the present invention is an ink storage container containing an aqueous ink for ink jet recording, in which the aqueous ink is the aqueous ink for ink jet recording according to the present invention. As the ink storage container, for example, an ink storage container known in the related art can be used. Examples of the ink storage container include an ink cartridge, tank, and pouch.

Next, an ink jet recording device and an ink jet recording method according to the present invention will be described.

The ink jet recording device according to the present invention is an ink jet recording device including: an ink storage unit; and an ink ejection unit, in which an ink contained in the ink storage unit is ejected by the ink ejection unit, and the ink storage unit contains the aqueous ink for ink jet recording according to the present invention.

Figure shows a configuration of an example of the ink jet recording device according to the present invention. As shown in the figure, an ink jet recording device 1 includes four ink storage units (ink cartridges 2), an ink ejection unit (inkjet head) 3, a head unit 4, a carriage 5, a drive unit 6, a platen roller 7, and a purge device 8 as main components.

The four ink cartridges 2 each contain one color of aqueous ink of four colors: yellow, magenta, cyan, and black. For example, at least one of the four color aqueous inks is the aqueous ink according to the present invention. In this example, a set of four ink cartridges 2 is shown, but instead of this, an integrated ink cartridge which is partitioned so as to form an aqueous yellow ink storage unit, an aqueous magenta ink storage unit, an aqueous cyan ink storage unit, and an aqueous black ink storage unit therein may be used. As a main body of the ink cartridge, for example, an ink cartridge known in the related art can be used.

The ink jet head 3 provided in the head unit 4 performs recording on a recording medium (for example, a recording sheet) P. The four ink cartridges 2 and the head unit 4 are mounted on the carriage 5. The drive unit 6 reciprocates the carriage 5 in a linear direction. As the drive unit 6, for example, a drive unit known in the related art can be used (see, for example, JP2008-246821A). The platen roller 7 extends in a reciprocating direction of the carriage 5 and is disposed in a manner of facing the ink jet head 3.

The ink jet head 3 is formed by stacking a plurality of thin plates made of a metal, for example. A through hole is formed in each of the thin plates. By stacking the plurality of thin plates in which the through hole is formed, a flow path for passing the aqueous ink is formed. The thin plates are bonded by, for example, an adhesive.

The purge device 8 suctions a defective ink containing air bubbles and the like accumulated in the ink jet head 3. As the purge device 8, for example, a purge device known in the related art can be used (see, for example, JP2008-246821A).

A wiper member 20 is disposed adjacent to the purge device 8 on a platen roller 7 side of the purge device 8. The wiper member 20 is formed in a spatula shape and wipes a nozzle forming surface of the ink jet head 3 as the carriage 5 moves. In Figure, a cap 18 covers a plurality of nozzles of the ink jet head 3 to be returned to a reset position when recording is completed in order to prevent drying of the aqueous ink.

In the ink jet recording device 1 in this example, the four ink cartridges 2 are mounted on one carriage 5 together with the head unit 4. However, the present invention is not limited thereto. In the ink jet recording device 1, each of the four ink cartridges 2 may be mounted on a carriage different from the head unit 4. In addition, each of the four ink cartridges 2 may be disposed and fixed in the ink jet recording device 1 without being mounted on the carriage 5. In these aspects, for example, each of the four ink cartridges 2 and the head unit 4 mounted on the carriage 5 are connected by a tube or the like, and the aqueous ink is supplied from each of the four ink cartridges 2 to the head unit 4. In addition, in these aspects, four ink bottles each having a bottle shape may be used instead of the four ink cartridges 2. In this case, it is preferable that the ink bottle is provided with an injection port for injecting the ink from an outside to an inside.

Ink jet recording using the ink jet recording device 1 is performed as follows, for example. First, the recording sheet P is fed from a sheet feeding cassette (not shown) provided on a lateral side or a lower side of the ink jet recording device 1. The recording sheet P is introduced between the ink jet head 3 and the platen roller 7. Predetermined recording is performed on the introduced recording sheet P with the aqueous ink ejected from the ink jet head 3. This ejection may be performed, for example, at a first ejection amount as described above, or may be performed at a second ejection amount when a specific condition is satisfied. The recording sheet P after the recording is discharged from the ink jet recording device 1. In Figure, a sheet feeding mechanism and a sheet discharging mechanism for the recording sheet P are not shown.

In the device shown in Figure, a serial type ink jet head is used, but the present invention is not limited thereto. The ink jet recording device may be a device using a line type ink jet head or roll to roll.

Next, an ink jet recording method according the present invention is an ink jet recording method including a recording step of performing recording by ejecting an aqueous ink to a recording medium by an ink jet method, in which in the recording step, as the aqueous ink, the aqueous ink for ink jet recording according to the present invention is used. The ink jet recording method according to the present invention can be performed by, for example, using the ink jet recording device according to the present invention. The recording includes printing words, printing an image, or printing.

EXAMPLES

Next, Examples of the present invention will be described together with Comparative Examples. Note that the present invention is not limited or restricted by the following Examples and Comparative Examples.

(Adjustment of Pigment Dispersion Liquid A)

Pure water was added to 20 mass% of a pigment (carbon black) and 7 mass% of neutralized sodium hydroxide of a styrene-acrylic acid copolymer (acid value: 175 mgKOH/g, molecular weight: 10000) to make a total of 100 mass%, followed by stirring and mixing, to obtain a mixture. This mixture was charged into a wet sand mill filled with zirconia beads having a diameter of 0.3 mm and subjected to a dispersion treatment for 6 hours. Thereafter, the zirconia beads were removed using a separator, and the resultant was filtered through a cellulose acetate filter having a pore diameter of 3.0 $\mu$m to obtain a pigment dispersion liquid A. The styrene-acrylic acid copolymer is a water-soluble polymer that is generally used as a dispersant for pigments. Note that, in the pigment dispersion liquid A, a blending amount (A) of a pigment solid was 15 mass% with respect to a total amount of the pigment dispersion liquid A. In addition, in the pigment dispersion liquid A, carbon black as the pigment is dispersed in a styrene-acrylic acid copolymer as a resin dispersant.

(Examples 1 to 14 and Comparative Examples 1 to 3)

The components in aqueous ink compositions (Tables 1 and 2) except for a coloring material (coloring agent) were mixed uniformly to obtain an ink solvent. Next, the coloring material was added to the ink solvent, followed by uniform mixing. Thereafter, the obtained mixture was filtered through a cellulose acetate type membrane filter (pore diameter: 3.00 $\mu$m) manufactured by TOYO ROSHI KAISHA, LTD. to obtain an aqueous ink for ink jet recording in each of Examples 1 to 14 and Comparative Examples 1 to 3 shown in Tables 1 and 2.

Regarding the aqueous inks in Examples 1 to 9 and Comparative Examples 1 and 2, (a) preservability, (b) optical density (OD value), (c) storage stability, and (d) ejection stability were evaluated by the following methods.

Regarding the aqueous inks in Examples 10 to 14 and Comparative Example 3, (a) preservability, (d) ejection stability, and (e) printing quality were evaluated by the following methods.

Note that, the lignosulfonic acid salt or the like used in the aqueous ink according to the present invention usually have a brownish color. Therefore, regarding the aqueous inks in Examples 1 to 9 and Comparative Examples 1 and 2 containing a black pigment as an example of an achromatic coloring material, since there was no change in color difference $\Delta$E even when the black pigment was mixed with the lignosulfonic acid salt or the like, the optical density (OD value) was evaluated. On the other hand, regarding the aqueous inks in Examples 10 to 14 and Comparative Example 3 containing a color dye as an example of a chromatic coloring material, in order to check the change in color caused by mixing with the lignosulfonic acid salt or the like, the color difference $\Delta$E (printing quality) was evaluated as described below.

(a) Preservability

The aqueous ink in each of Examples 1 to 14 and Comparative Examples 1 to 3 was applied to food stamp standard agar (manufactured by Nissui Pharmaceutical Co., Ltd.), followed by storage in an environment at a temperature of 35°C. Thereafter, the standard agar was visually inspected for the presence or absence of mold colonies, and the preservability was evaluated according to the following evaluation criteria.

Evaluation criteria for preservability

    A: no mold grows even after 5 days
    B: mold grows after 3 days
    C: mold grows after 2 days

(b) Optical Density (OD Value)

Using an ink jet recording device DCP-J987N manufactured by Brother Industries, Ltd., an image was recorded on a recording sheet ("Copy Paper ASKUL Multi-Paper Super White +" manufactured by ASKUL Corporation) using the aqueous ink aqueous ink in each of Examples 1 to 9 and Comparative Examples 1 and 2 to prepare an evaluation sample. The optical density (OD value) at three locations in the evaluation sample was measured using a spectrophotometer SpectroEye (Light source: D50, viewing angle: 2°, ANSI-T) manufactured by X-Rite, and the average value was determined.

Evaluation criteria for optical density (OD value)

A: the OD value is 0.05 or more greater than an additive-free product
B: the OD value is 0.01 or more greater than an additive-free product

(c) Storage Stability

The aqueous ink of each of Examples and Comparative Examples immediately after preparation was placed in a sealed container and stored for 3 days in an environment at 60°C. After storage, the ink was observed under an optical microscope to check the presence or absence of aggregates.

Evaluation criteria for storage stability

A: no aggregate occurs after leaving at 60 degrees for 3 days
B: aggregate occurs after leaving at 60 degrees for 3 days

(d) Ejection Stability

Using an ink jet recording device DCP-J987N manufactured by Brother Industries, Ltd., a solid image was recorded on a recording sheet ("Copy Paper ASKUL Multi-Paper Super White +" manufactured by ASKUL Corporation) using the aqueous ink aqueous ink in each of Examples 1 to 9 and Comparative Examples 1 and 2 to prepare an evaluation sample. A lead chipping was evaluated according to the following evaluation criteria. Note that, the term "lead chipping" refers to a situation where the beginning of printing fails during solid printing, and the leading portion remains blank.

Evaluation criteria for ejection stability

A: no lead chipping during solid printing
B: lead chipping during solid printing

(e) Printing Quality

Using an ink jet recording device DCP-J987N manufactured by Brother Industries, Ltd., an image was recorded on a recording sheet ("Copy Paper ASKUL Multi-Paper Super White +" manufactured by ASKUL Corporation) using the aqueous ink aqueous ink in each of Examples 10 to 14 and Comparative Example 3 to prepare an evaluation sample. The colors (L*, a* and b*) at three locations in the evaluation sample were measured using a spectrophotometer SpectroEye (Light source: D50, viewing angle: 2°, ANSI-T) manufactured by X-Rite, and the average value was determined. L*, a*, and b* are based on the L*a*b* color system (CIE1976 (L*a*b*) color system) standardized by the International Commission on Illumination (CIE) in 1976 (see JIS Z 8729). The color difference (ΔE1) between the color of the evaluation sample of the recording sheet and the color of the evaluation sample of the cotton was calculated according to the following equation and evaluated according to the following evaluation criteria.

$$\Delta E = \{(L*1\text{-}L*2)2+(a*1\text{-}a*2)2+(b*1\text{-}b*2)2\}1/2$$

Here, L*1, a*1, and b*1 are the measurement results for Examples, and L*2, a*2, and b*2 are the measurement results for Comparative Example 3.

Evaluation criteria for printing quality

A: ∆E is 3.0 or less
B: ∆E is greater than 3.0

The aqueous ink composition and the evaluation result of the aqueous ink in each of Examples 1 to 14 and Comparative Examples 1 to 3 are shown in Tables 1 and 2.

[Table 1]

| | | | Example 1 | Example 2 | Example 3 | Example 4 | Example 5 | Example 6 |
|---|---|---|---|---|---|---|---|---|
| Composition | Pigment (A) | CAB-O-JET® 300 (15%) *1 | 26.66 | 26.66 | | 26.66 | 26.66 | 26.66 |
| | | Pigment dispersion liquid A (15%) *2 | | | 26.66 | | | |
| | Water-soluble dve (B) | Direct Blue 199 | | | | | | |
| | Water-soluble organic solvent | Glycerin | 25.00 | 25.00 | 20.00 | 25.00 | 20.00 | 16.00 |
| | | Triethylene glycol monobutyl ether | 5.00 | 5.00 | 5.00 | 5.00 | 5.00 | 5.00 |
| | Lignosulfonic acid salt or the like (C) | Sodium lignosulfonate | 2.00 | | 2.00 | 1.20 | 4.50 | 5.00 |
| | | Calcium lignosulfonate | | 2.00 | | | | |
| | Solvent | Water | Balance | Balance | Balance | Balance | Balance | Balance |
| Mass ratio | A/C | | 2.0 | 2.0 | 2.0 | 3.6 | 0.9 | 0.8 |
| Effect | Preservability | A: no mold grows even after 5 days B: mold grows after 3 days C: mold grows after 2 days | A | A | A | A | A | A |
| | OD value | A: OD value is 0.05 or more greater than additive-free product B: OD value is 0.01 or more greater than additive-free product | A 0.94 | A 0.94 | A 0.86 | A 0.93 | A 0.97 | A 1.02 |

(continued)

| | | | Example 1 | Example 2 | Example 3 | Example 4 | Example 5 | Example 6 |
|---|---|---|---|---|---|---|---|---|
| | Storage stability | A: no aggregate occurs after leaving at 60 degrees for 3 days B: aggregate occurs after leaving at 60 degrees for 3 days | A | A | A | A | B | B |
| | Ejection stability | A: no lead chipping B: lead chipping | A | A | A | A | A | B |

| | | | Example 7 | Example 8 | Example 9 | Comparative Example 1 | Comparative Example 2 |
|---|---|---|---|---|---|---|---|
| Composition | Pigment (A) | CAB-O-JET® 300 (15%) * 1 | 26.66 | 26.66 | 26.66 | 26.66 | |
| | | Pigment dispersion liquid A (15%) *2 | | | | | 26.66 |
| | Water-soluble dye (B) | Direct Blue 199 | | | | | |
| | Water-soluble organic solvent | Glycerin | 25.00 | 25.00 | 25.00 | 25.00 | 25.00 |
| | | Triethylene glycol monobutyl ether | 5.00 | 5.00 | 5.00 | 5.00 | 5.00 |
| | Lignosulfonic acid salt or the like (C) | Sodium lignosulfonate | 0.40 | 0.20 | 0.10 | | |
| | | Calcium lignosulfonate | | | | | |
| | Solvent | Water | Balance | Balance | Balance | Balance | Balance |
| Mass ratio | A/C | | 10 | 20 | 40 | - | - |
| Effect | Preservability | A: no mold grows even after 5 days B: mold grows after 3 days C: mold grows after 2 days | A | A | B | C | C |

(continued)

|  |  |  | Example 7 | Example 8 | Example 9 | Comparative Example 1 | Comparative Example 2 |
|---|---|---|---|---|---|---|---|
|  | OD value | A: OD value is 0.05 or more greater than additive-free product B: OD value is 0.01 or more greater than additive-free product | B 0.90 | B 0.89 | B 0.89 | Criterion 0.88 | Criterion 0.81 |
|  | Storage stability | A: no aggregate occurs after leaving at 60 degrees for 3 days B: aggregate occurs after leaving at 60 degrees for 3 days | A | A | A | A | A |
|  | Ejection stability | A: no lead chipping B: lead chipping | A | A | A | A | A |
| *1: pigment solid content: 15%, manufactured by Cabot Corporation *2: carbon black aqueous dispersion liquid (containing resin dispersion), pigment solid content: 15% | | | | | | | |

[Table 2]

| Composition | | | Example 10 | Example 11 | Example 12 | Example 13 | Example 14 | Comparative Example 3 |
|---|---|---|---|---|---|---|---|---|
| Composition | Pigment (A) | CAB-O-JET® 300 (15%) *1 | | | | | | |
| Composition | Pigment (A) | Pigment dispersion liquid A (15%) *2 | | | | | | |
| Composition | Water-soluble dye (B) | Direct Blue 199 | 4.00 | 4.00 | 4.00 | 4.00 | 5.00 | 4.00 |
| Composition | Water-soluble organic solvent. | Glycerin | 25.00 | 25.00 | 25.00 | 23.00 | 25.00 | 25.00 |
| Composition | Water-soluble organic solvent. | Triethylene glycol monobutyl ether | 5.00 | 5.00 | 5.00 | 5.00 | 5.00 | 5.00 |
| Composition | Lignosulfonic acid salt or the like (C) | Sodium lignosulfonate | 2.00 | | 4.00 | 5.00 | 0.10 | |
| Composition | Lignosulfonic acid salt or the like (C) | Calcium lignosulfonate | | 2.00 | | | | |
| Composition | Solvent | Water | Balance | Balance | Balance | Balance | Balance | Balance |
| Mass ratio | B/C | | 2.0 | 2.0 | 1.0 | 0.8 | 50 | - |
| Effect | Preservability | A: no mold grows even after 5 days<br>B: mold grows after 3 days<br>C: mold grows after 2 days | A | A | A | A | B | C |
| Effect | Ejection stability | A: no lead chipping<br>B: lead chipping | A | A | A | B | A | A |
| Effect | Printing quality | A: ΔE is 3.0 or less<br>B: ΔE is greater than 3.0 | A 2.0 | A 2.1 | A 2.4 | B 4.0 | A 1.4 | Criterion |

*1: pigment solid content: 15%, manufactured by Cabot Corporation
*2: carbon black aqueous dispersion liquid (containing resin dispersion), pigment solid content: 15%

As shown in Table 1, Examples 1 to 14 have evaluation results for the preservability of "B" or more. In addition, as shown in Examples 1, 2, 9, and 10, the preservability evaluation is good regardless of the difference in the lignosulfonic acid salt or the like. Further, as shown in Examples 1 to 14, regardless of whether the coloring agent contained in the aqueous ink is a pigment or a dye, the evaluation results for the preservability are all good.

In Examples 1 to 5, 7 to 8, and 10 to 12 in which the blending amount of the lignosulfonic acid salt or the like with respect to the total amount of the aqueous ink is 0.2 mass% or more and 4.5 mass% or less, the preservability and the ejection stability are more excellent than those in other Examples.

In Examples 1 to 5 in which the blending amount of the lignosulfonic acid salt or the like with respect to the aqueous ink is 0.5 mass% or more and 4.5 mass% or less when the coloring agent is a pigment, the preservability is excellent, and the OD value and the ejection stability more excellent than those in other Examples.

In addition, in Examples 1 to 4 in which the blending amount of the lignosulfonic acid salt or the like with respect to the aqueous ink is 1.2 mass% or more and 4.0 mass% or less when the coloring agent is a pigment, the preservability, the OD value, the ejection stability, and the storage stability are all excellent.

Further, in Examples 1 to 4 in which, when the coloring agent is a pigment, the mass ratio (A/C) of the content (A) of the pigment to the content (C) of the lignosulfonic acid salt or the like in the total amount of the aqueous ink is 1 or more and 9.5 or less, the preservability, the OD value, the ejection stability, and the storage stability are all more excellent.

In Examples 10 to 13 in which the blending amount of the lignosulfonic acid salt or the like with respect to the aqueous ink is 1.0 mass% or more and 5.0 mass% or less when the coloring agent is a dye, the preservability is more excellent than that in other Examples.

In addition, in Examples 10 to 12 in which, when the coloring agent is a water-soluble dye, the mass ratio (B/C) of the content (B) of the water-soluble dye to the content (C) of the lignosulfonic acid salt or the like in the total amount of the aqueous ink is 1 or more and 10 or less, the preservability, the ejection stability, and the printing quality are all more excellent than those in other Examples.

On the other hand, in Comparative Examples 1 to 3 not using the lignosulfonic acid salt, the preservability evaluation is all "C", which is poor.

A part or all of the above embodiment and Examples may be described as the following appendixes, but the present invention is not limited thereto.

(Appendix 1)

An aqueous ink for ink jet recording containing:

water;
a water-soluble organic solvent;
a coloring agent; and
lignosulfonic acid or a salt thereof, in which
the coloring agent is at least one of a self-dispersed pigment, a resin dispersion pigment, and a water-soluble dye.

(Appendix 2)

The aqueous ink for ink jet recording according to Appendix 1, in which a blending amount of the lignosulfonic acid or a salt thereof is 0.2 mass% or more and 4.5 mass% or less with respect to a total amount of the aqueous ink for ink jet recording.

(Appendix 3)

The aqueous ink for ink jet recording according to Appendix 1 or 2, in which the coloring agent contains the self-dispersed pigment or the resin dispersion pigment.

(Appendix 4)

The aqueous ink for ink jet recording according to Appendix 3, in which the blending amount of the lignosulfonic acid or a salt thereof is 0.5 mass% or more and 4.5 mass% or less with respect to the total amount of the aqueous ink for ink jet recording.

(Appendix 5)

The aqueous ink for ink jet recording according to Appendix 3 or 4, in which a mass ratio (A/C) of a content (A) of the self-dispersion type pigment or the resin dispersion pigment to a content (C) of the lignosulfonic acid or a salt thereof is 1 or more and 9.5 or less in the total amount of the aqueous ink for ink jet recording.

(Appendix 6)

The aqueous ink for ink jet recording according to Appendix 3, in which the blending amount of the lignosulfonic acid or a salt thereof is 1.2 mass% or more and 4.0 mass% or less with respect to the total amount of the aqueous ink for ink jet recording.

(Appendix 7)

The aqueous ink for ink jet recording according to Appendix 1 or 2, in which the coloring agent contains the water-soluble dye.

(Appendix 8)

The aqueous ink for ink jet recording according to Appendix 7, in which a blending amount of the dye is 1.0 mass% or more and 5.0 mass% or less with respect to the total amount of the aqueous ink for ink jet recording.

(Appendix 9)

The aqueous ink for ink jet recording according to Appendix 7 or 8, in which a mass ratio (B/C) of a content (B) of the water-soluble dye to a content (C) of the lignosulfonic acid or a salt thereof is 1 or more and 10 or less in the total amount of the aqueous ink for ink jet recording.

(Appendix 10)

An ink jet recording method including:

a recording step of performing recording by ejecting an aqueous ink for ink jet recording to a recording medium by an ink jet method, in which
in the recording step, as the aqueous ink for ink jet recording, the aqueous ink for ink jet recording according to any one of Appendixes 1 to 9 is used.

(Appendix 11)

An ink jet recording device including:

an ink storage unit; and
an ink ejection unit, in which
an ink contained in the ink storage unit is ejected by the ink ejection unit, and
the ink storage unit contains the aqueous ink for ink jet recording according to any one of Appendixes 1 to 9.

(Appendix 12)

An ink storage container containing an aqueous ink for ink jet recording, in which
the aqueous ink for ink jet recording is the aqueous ink for ink jet recording according to any one of Appendixes 1 to 9.

INDUSTRIAL APPLICABILITY

As described above, the aqueous ink according to the present invention contains lignosulfonic acid or a salt thereof and thereby has preservability. The aqueous ink according to the present invention is widely applicable to ink jet recording on various recording media.

REFERENCE SIGNS LIST

1    ink jet recording device
2    ink cartridge
3    ink ejection unit (ink jet head)
4    head unit
5    carriage
6    drive unit
7    platen roller
8    purge device

**Claims**

1. An aqueous ink for ink jet recording comprising:

   water;
   a water-soluble organic solvent;
   a coloring agent; and
   lignosulfonic acid or a salt thereof, wherein
   the coloring agent is at least one of a self-dispersed pigment, a resin dispersion pigment, and a water-soluble dye.

2. The aqueous ink for ink jet recording according to claim 1, wherein a blending amount of the lignosulfonic acid or a salt thereof is 0.2 mass% or more and 4.5 mass% or less with respect to a total amount of the aqueous ink for ink jet recording.

3. The aqueous ink for ink jet recording according to claim 1 or 2, wherein the coloring agent contains the self-dispersed pigment or the resin dispersion pigment.

4. The aqueous ink for ink jet recording according to claim 3, wherein the blending amount of the lignosulfonic acid or a salt thereof is 0.5 mass% or more and 4.5 mass% or less with respect to the total amount of the aqueous ink for ink jet recording.

5. The aqueous ink for ink jet recording according to claim 3, wherein a mass ratio (A/C) of a content (A) of the self-dispersion type pigment or the resin dispersion pigment to a content (C) of the lignosulfonic acid or a salt thereof is 1 or more and 9.5 or less in the total amount of the aqueous ink for ink jet recording.

6. The aqueous ink for ink jet recording according to claim 3, wherein the blending amount of the lignosulfonic acid or a salt thereof is 1.2 mass% or more and 4.0 mass% or less with respect to the total amount of the aqueous ink for ink jet recording.

7. The aqueous ink for ink jet recording according to claim 1 or 2, wherein the coloring agent contains the water-soluble dye.

8. The aqueous ink for ink jet recording according to claim 7, wherein a blending amount of the dye is 1.0 mass% or more and 5.0 mass% or less with respect to the total amount of the aqueous ink for ink jet recording.

9. The aqueous ink for ink jet recording according to claim 7, wherein a mass ratio (B/C) of a content (B) of the water-soluble dye to a content (C) of the lignosulfonic acid or a salt thereof is 1 or more and 10 or less in the total amount of the aqueous ink for ink jet recording.

10. An ink jet recording method comprising:

    a recording step of performing recording by ejecting an aqueous ink for ink jet recording to a recording medium by an ink jet method, wherein
    in the recording step, as the aqueous ink for ink jet recording, the aqueous ink for ink jet recording according to claim 1 or 2 is used.

11. An ink jet recording device comprising:

    an ink storage unit; and

an ink ejection unit, wherein
an ink contained in the ink storage unit is ejected by the ink ejection unit, and
the ink storage unit contains the aqueous ink for ink jet recording according to claim 1 or 2.

12. An ink storage container containing an aqueous ink for ink jet recording, wherein
the aqueous ink for ink jet recording is the aqueous ink for ink jet recording according to claim 1 or 2.

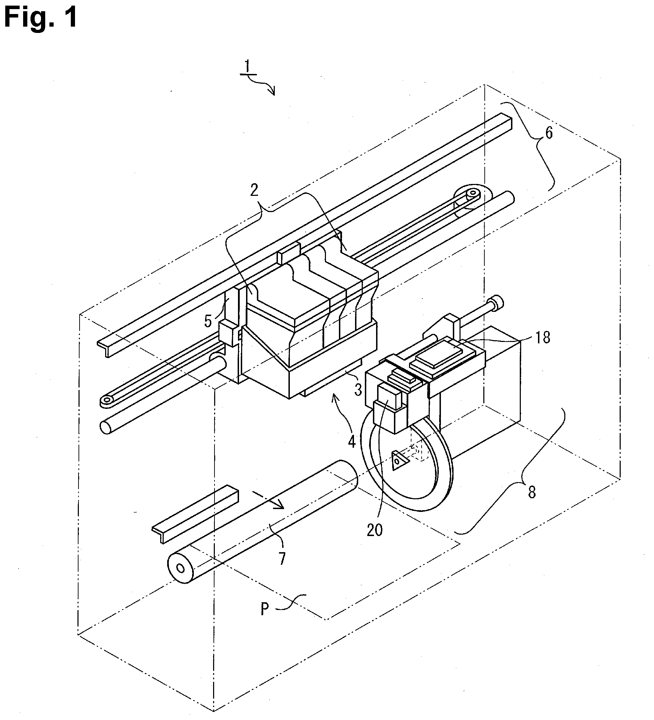

# Fig. 1

## INTERNATIONAL SEARCH REPORT

| International application No. |
|---|
| **PCT/JP2023/013543** |

**A. CLASSIFICATION OF SUBJECT MATTER**

*C09D 11/38*(2014.01)i; *B41M 5/00*(2006.01)i; *B41J 2/01*(2006.01)i; *B41J 2/175*(2006.01)i
FI:  C09D11/38; B41M5/00 100; B41M5/00 120; B41J2/01 501; B41J2/175 101

According to International Patent Classification (IPC) or to both national classification and IPC

**B. FIELDS SEARCHED**

Minimum documentation searched (classification system followed by classification symbols)

C09D11/38; B41M5/00; B41J2/01; B41J2/175

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 57-006791 A (CANON INC.) 13 January 1982 (1982-01-13)<br>claims, p. 2, lower left column, line 17 to p. 3, upper right column, line 7, p. 3, lower right column, line 14 to p. 4, upper left column, line 13, p. 4, lower right column, line 12 to p. 5, upper left column, line 8, p. 5, upper left column, line 20 to upper right column, line 4, examples | 1–6, 10–12 |
| X | JP 2011-246518 A (RICOH CO., LTD.) 08 December 2011 (2011-12-08)<br>claims, paragraphs [0004], [0009], examples | 1-3, 10-12 |
| X | JP 2-241785 A (TORAY INDUSTRIES, INC.) 26 September 1990 (1990-09-26)<br>claims, p. 2, upper left column, line 18 to upper right column, line 13, p. 2, lower left column, line 16 to lower right column, line 1, examples | 1–6, 10–12 |
| X | JP 11-081163 A (SEIREN CO., LTD.) 26 March 1999 (1999-03-26)<br>claims, paragraphs [0005], [0044], [0045], examples | 1-2, 7-12 |
| X | JP 2016-060772 A (SEIKO EPSON CORP.) 25 April 2016 (2016-04-25)<br>claims, paragraphs [0002], [0005], [0043]-[0049], [0054]-[0056], examples | 1-2, 7-12 |

☑ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 May 2023** | **30 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/013543**

| | C. | DOCUMENTS CONSIDERED TO BE RELEVANT | | |

| Category* | Citation of document, with indication, where appropriate, of the relevant passages | Relevant to claim No. |
|---|---|---|
| X | JP 2005-194679 A (UDM, INC.) 21 July 2005 (2005-07-21)<br>claims, paragraphs [0010], [0021]-[0027], examples | 1, 7-8, 10-12 |
| A | JP 2001-515848 A (NORSK HYDRO ASA) 25 September 2001 (2001-09-25)<br>entire text | 1-12 |

Form PCT/ISA/210 (second sheet) (January 2015)

## INTERNATIONAL SEARCH REPORT
### Information on patent family members

International application No.

**PCT/JP2023/013543**

| Patent document cited in search report | | | Publication date (day/month/year) | Patent family member(s) | | | Publication date (day/month/year) |
|---|---|---|---|---|---|---|---|
| JP | 57-006791 | A | 13 January 1982 | (Family: none) | | | |
| JP | 2011-246518 | A | 08 December 2011 | (Family: none) | | | |
| JP | 2-241785 | A | 26 September 1990 | (Family: none) | | | |
| JP | 11-081163 | A | 26 March 1999 | US<br>claims, column 2, lines<br>5-12, column 8, lines 36-57,<br>examples<br>EP | 6214417<br><br><br><br>890672 | B1<br><br><br><br>A2 | |
| JP | 2016-060772 | A | 25 April 2016 | US<br>claims, paragraphs [0004]-<br>[0006], [0049]-[0055], [0060]-<br>[0062], examples<br>EP | 2016/0075879<br><br><br><br>2998372 | A1<br><br><br><br>A1 | |
| JP | 2005-194679 | A | 21 July 2005 | (Family: none) | | | |
| JP | 2001-515848 | A | 25 September 2001 | WO<br>entire text<br>EP | 1999/012435<br><br>1014809 | A1<br><br>A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008239733 A
- JP H083498 A
- JP 2000513396 A
- JP 2008524400 A
- JP 2009515007 A
- JP 2011515535 A
- JP 2008246821 A